# EUROPEAN PATENT APPLICATION

(11) **EP 4 588 852 A1**
(43) Date of publication of application: **23.07.2025**
(21) Application number: 24153068.2
(22) Date of filing: 22.01.2024
(51) Int. Cl.: B65G 1/04

(54) **A STORAGE AND RETRIEVAL SYSTEM**

(71) Applicant: AUTOSTORE TECHNOLOGY AS, 5578 Nedre Vats (NO)
(72) Inventor: STUHAUG, Ragnar, 5578 Nedre Vats (NO); GJERDEVIK, Øystein, 5578 Nedre Vats (NO)
(74) Representative: Kilburn & Strode LLP

(57) **Abstract**

The disclosure relates to a storage and retrieval system comprising at least one storage column, the storage column (502) configured to receive storage containers (512) from a container-handling vehicle and to accommodate a plurality of received storage containers (512) in a vertical stack, and also comprising a retractable support (530), wherein the retractable support (530) is movable between a first retracted position and a second extended position, and wherein the retractable support (530) is arranged to support a subset of the plurality of storage containers (512) in the vertical stack in the second extended position.

## Description

### TECHNICAL FIELD

The disclosure relates to a storage and retrieval system. More particularly, it relates to a storage and retrieval system comprising a retractable support, a method of stacking a plurality of storage containers using the storage and retrieval system, and a method of retrieving a storage container using the storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Storage containers, also referred to as bins, are dimensioned to fit a standard structure of the storage and retrieval system, so that the storage containers can be stacked in one or more vertical stacks within the three-dimensional grid of the storage and retrieval system. The storage containers typically have a maximum weight of goods which can be accommodated by each storage container. This maximum weight can depend on the dimensions of the storage container, and also the location of the storage container within a vertical stack. For example, storage containers may be able to accommodate loads of up to 30kg, depending on their dimensions and location within a vertical stack.

There exists a maximum load which can be placed upon each storage container which must be taken into account when stacking storage containers in the grid. The height of a vertical stack of storage containers in the grid system can thus be limited by the maximum load placed on the storage containers located towards the bottom of the stack. As such, the number of storage containers which can be contained within the grid system is limited, reducing the amount of stock which can be stored within the storage and retrieval system. The present inventors have recognised that it would be advantageous to provide systems or methods which address these shortcomings of existing storage and retrieval systems.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a side view of a storage and retrieval system comprising a retractable support;
Fig. 5B-5C show a bottom view of a section of the arrangement shown in Fig. 5A;
Fig.5D-5G show further implementations of a storage and retrieval system comprising a retractable support;
Fig. 6A shows a perspective view of a container-handling vehicle;
Fig.6B-6C show a side view of an exemplary configuration of the storage and retrieval system;
Fig. 7 depicts a method of stacking a plurality of storage containers in the storage and retrieval system; and
Fig. 8 depicts a method of retrieving a storage container from the storage and retrieval system.

### DETAILED DESCRIPTION

In overview, the disclosure relates to a storage and retrieval system comprising a retractable support, or floor, which can be arranged to support a subset of stacked storage containers in a storage column. In this way, storage containers stacked in the storage column can be split into two or more separate stacks, thus splitting the load or weight of the storage containers between the stacks. As the retractable support takes the load or weight of a subset of the storage containers in the stack, the overall load on lower bins is reduced. This means that, for taller stacks, by using one or more retractable supports within the corresponding storage column, the load on bins located lower in the stack can be kept within an acceptable range or limit. The inclusion of taller stacks of storage containers in the grid can thus be facilitated, allowing for an increase in the amount of stock which can be stored within the storage and retrieval system.

The disclosure also relates to a method for stacking a plurality of storage containers in such a storage and retrieval system, and a method for retrieving a storage container from such a storage and retrieval system. A computer-readable medium, computer program and controller configured to carry out these methods are also provided herein.

### Automated storage and retrieval system overview

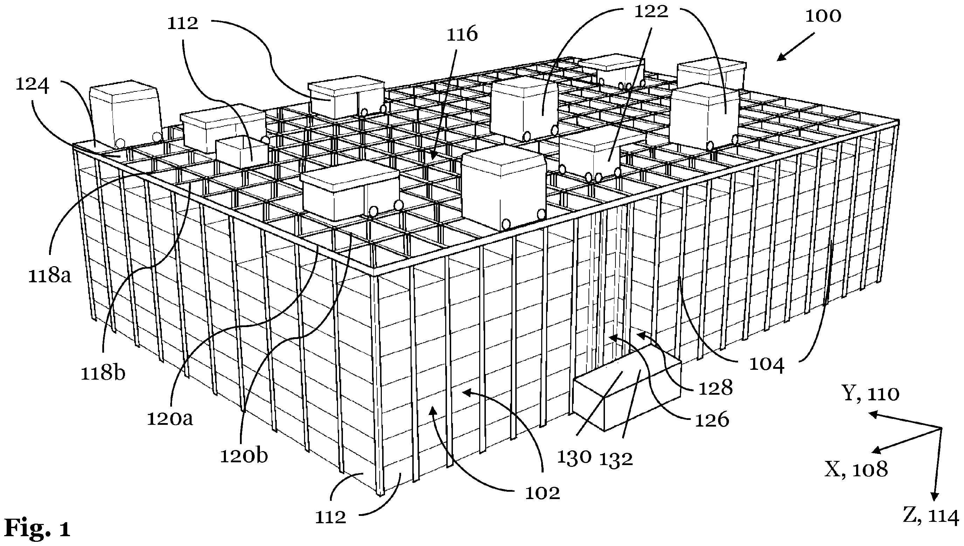

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

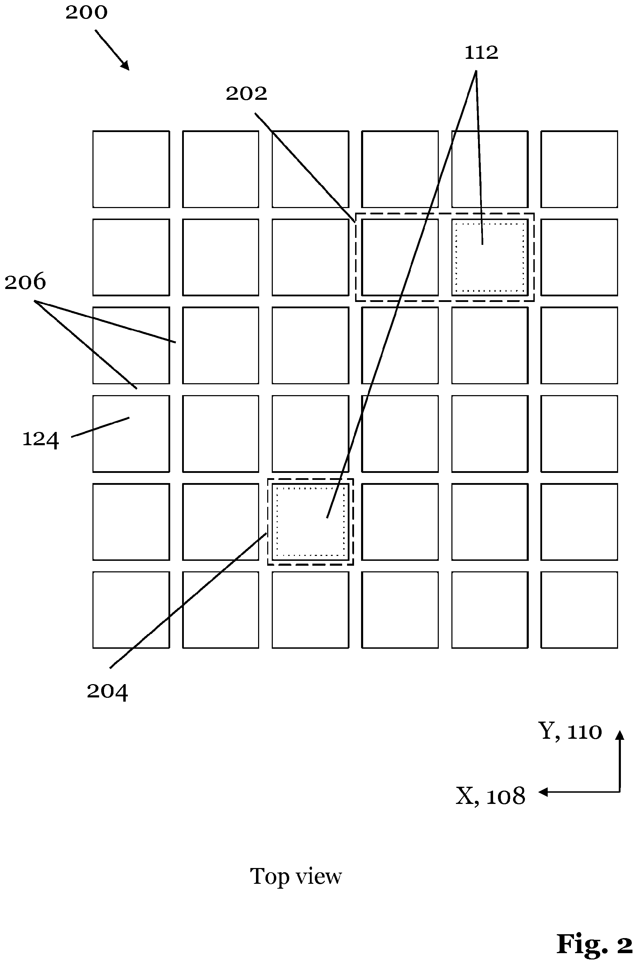

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

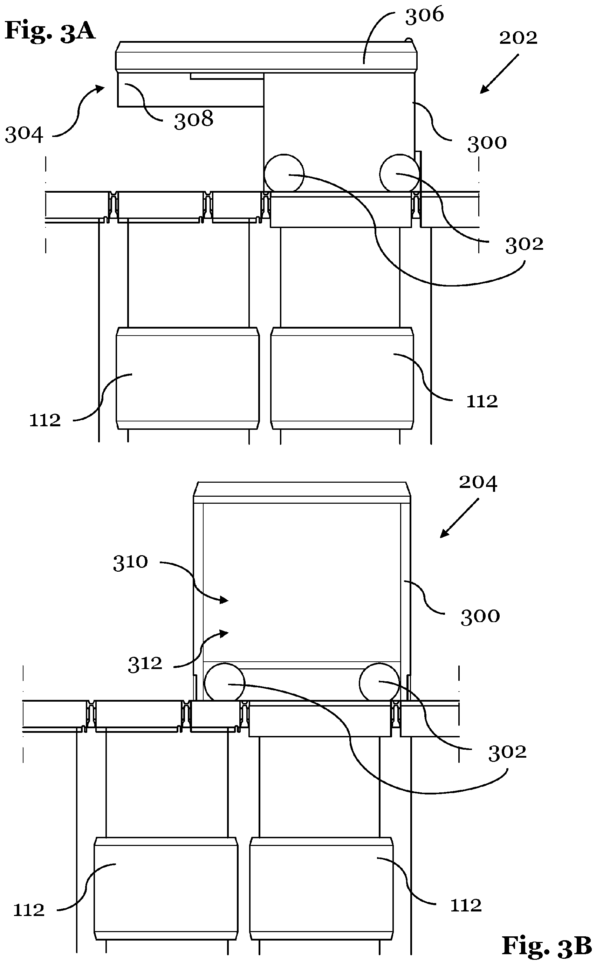

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

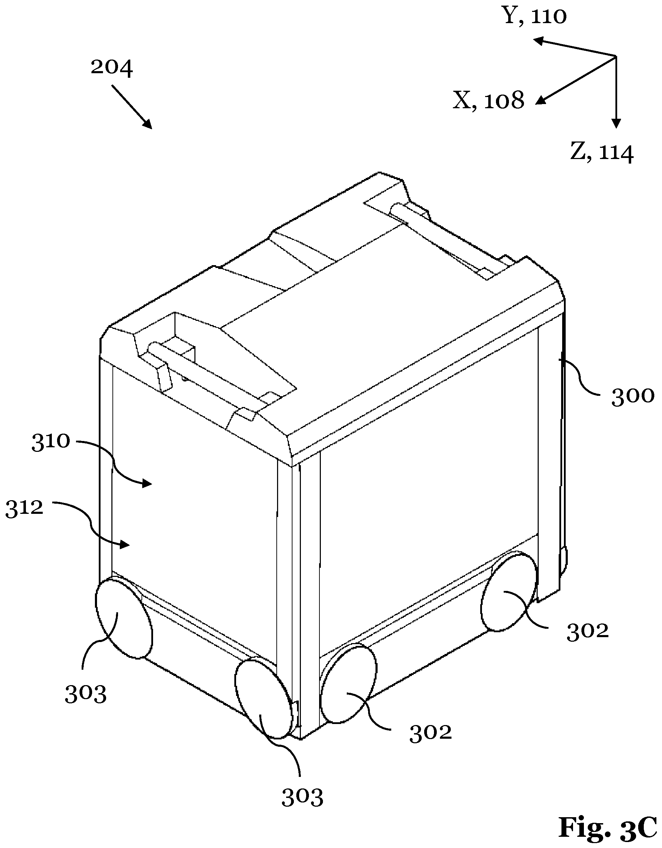

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

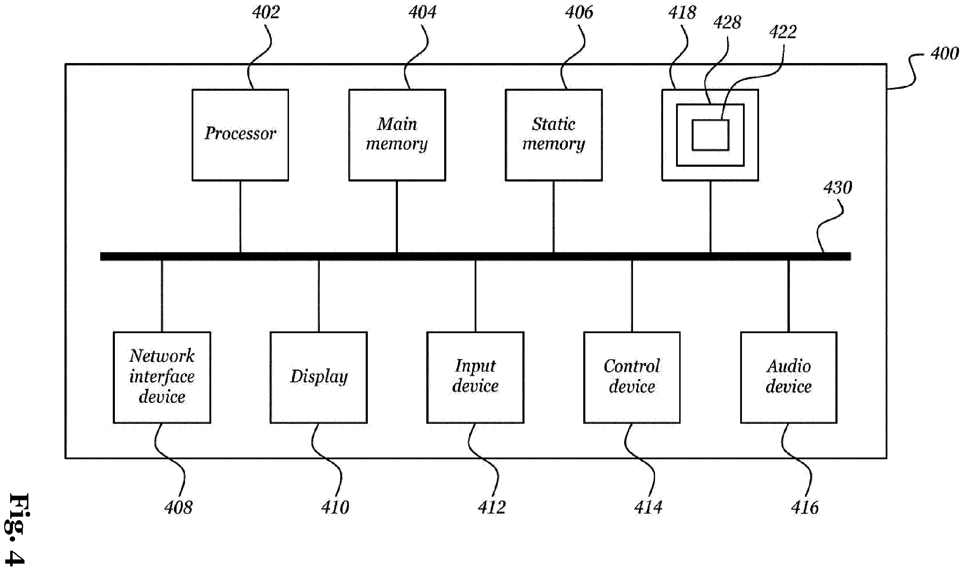

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Retractable support

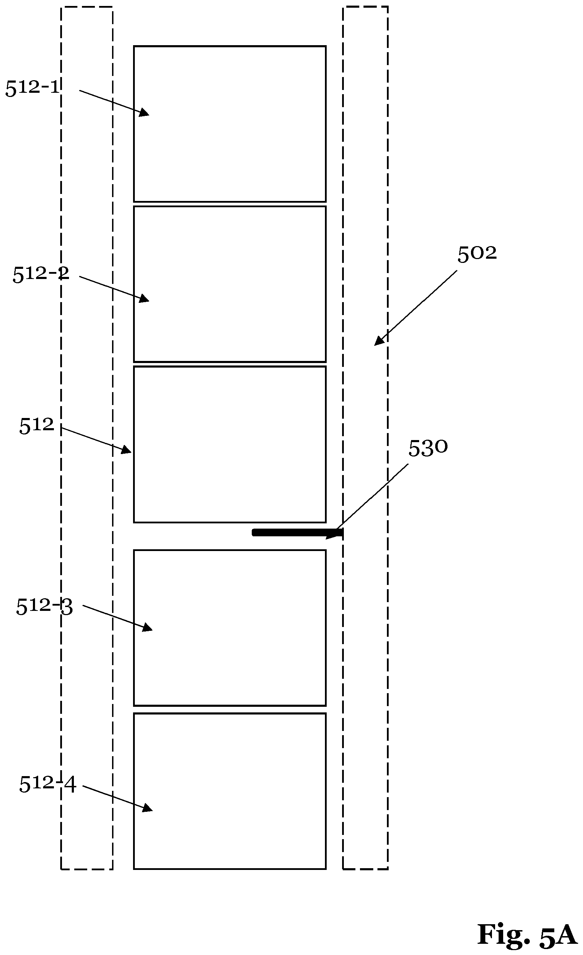

Disclosed herein is an implementation of the above-described storage and retrieval system which comprises a retractable support, or floor, as shown in an exemplary manner in Fig. 5A. As noted above, the storage and retrieval system comprises at least one storage column 102, which is configured to receive storage containers from a container-handling vehicle, such as a robot 122. The storage column, as described above with reference to Fig. 1, is configured to accommodate a plurality of received storage containers in a vertical stack. In other words, the storage column is dimensioned such as to receive a plurality of storage containers stacked one on top of another in a self-supporting manner.

The retractable support is movable between a first retracted position, and a second extended position, wherein the retractable support is arranged to support a subset of the plurality of storage containers in the vertical stack when in the extended position. In other words, the retractable support is configured to support one or more storage containers in a vertical stack, when in the extended position. In this way, the retractable support takes the load or weight of at least part of the vertical stack of storage containers, namely the one or more containers stacked upon the retractable support. This allows for the overall load on storage containers lower in the stack to be reduced, enabling taller vertical stacks of containers than would otherwise be possible.

The storage and retrieval system provided herein also allows for more efficient use of grids with low fill rates, as storage containers can be stacked on the extended retractable support closer to the top of a storage column, rather being stacked from the lowest point of the storage column. This allows storage containers to be placed closer to the top of the grid than they otherwise would be, reducing the time required to extract the container from the storage column.

Fig.5A shows a side view of the retractable support 530 when positioned in its extended state within the storage column 502. In this exemplary figure, five storage containers are shown in the vertical stack of containers stored within the storage column 502, but it is noted that this is merely an example and that there are many different sizes and configurations of storage columns and storage containers possible. In the present example, it can be seen that the upper three storage containers 512, 512-1 and 512-2 are supported by retractable support 530, where the retractable support 530 is in the extended position. As such, the weight of the upper three storage containers 512, 512-1 and 512-2 rests on the retractable support 530, instead of on the lower storage containers 512-3 and 512-4. The vertical stack of storage containers is thus split into two separate stacks, with the load or weight of the storage containers divided between the stacks, reducing the load acting on lower storage containers 512-3 and 512-4.

In the extended position, the retractable support 530 provides a support or floor to support a subset of the stacked storage containers. Retractable support 530 may extend partially across the storage column in the X- and/or Y- direction as shown in Fig. 5A, or may extend fully across the storage column in the X- and/or Y- direction to provide such a floor. The retractable support may alternatively comprise a plurality of supports, also referred to herein as inserts, which extend partially or fully across the storage column, the plurality of supports acting together to provide a floor to support a subset of the stacked storage containers.

In the retracted position, the retractable support is positioned so that it does not obstruct the storage containers in the storage column. In other words, the retractable support 530 may partially or fully retract out of the inner volume of the storage column when in the retracted position. Retracting the retractable support in this manner allows for storage containers to be stacked in the storage column as normal when the retractable support is not in the extended position. In the retracted position, the retractable support may be stored in a gap or a space between adjacent storage columns in the grid, or may be stored within the frame of the storage column itself.

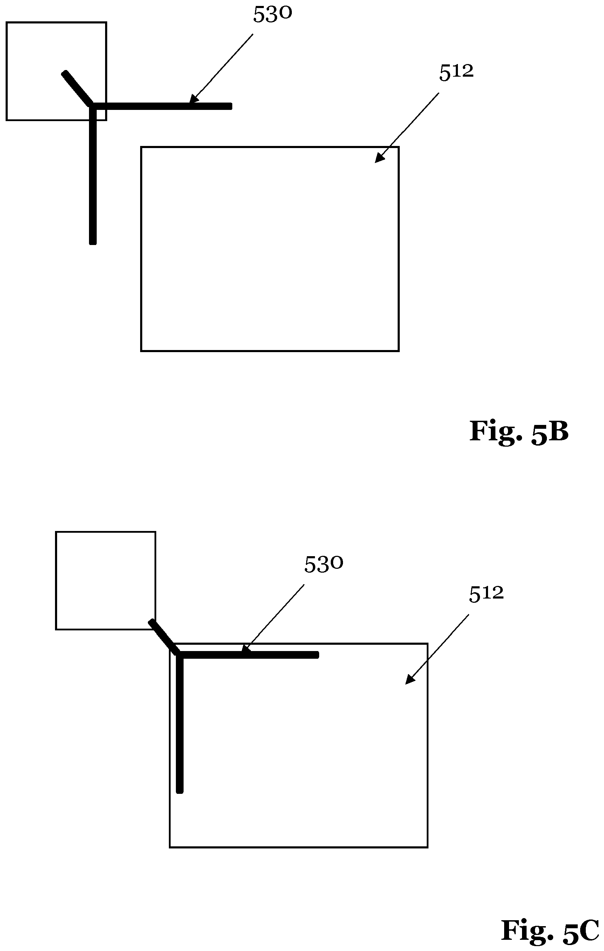

Fig. 5B depicts a bottom view of the storage container 512 in the arrangement of Fig. 5A. In this figure, the retractable support 530 is in the retracted position. As a result, it can be seen that the retractable support is not in contact with the bottom or base of the storage container 512, and is thus not supporting the weight or load of storage container 512 or any other storage containers stacked on top of storage container 512. It can be seen that retractable support 530 does not obstruct the vertical stack of storage containers in storage column (not shown) when in the retracted position.

Fig. 5C depicts the bottom view of the storage container 512 in the arrangement of Fig. 5A with retractable support 530 in the extended position. It can be seen that the retractable support 530 is now in contact with the base of the storage container 512, and is thus supporting the weight or load of storage container 512 and any other storage containers stacked on top of storage container 512.

The retractable support 530 depicted in Fig.5A and Fig. 5C extends partially across the storage column 512 in both the X- and Y-directions, in order to support the weight or load of the storage containers, and extends from a corner of the storage column 512. However, this is merely an exemplary configuration of the retractable support, and it is noted that many different configurations of the retractable support are possible.

In some implementations, the retractable support 530 may be configured to extend from a support beam of the storage column 502 in the extended position, and maybe configured to retract into a support beam of the storage column 502 in the retracted position. A support beam may be either a vertical support beam, also referred to as a vertical frame member 104, or a horizontal support beam, which may be a horizontal frame member, of the storage column. In this context, the term "vertical" means aligned with the Z axis 114 of Figure 1, and the term "horizontal" means aligned with the X axis 108 or Y axis 110 of Figure 1.

In implementations where the retractable support 530 comprises one or more inserts, an insert of the one or more inserts may be configured to extend from a support beam of the storage column 502. In further implementations, a plurality or all inserts of the one or more inserts may extend from a plurality of support beams of the storage column, and may retract into the plurality of support beams of the storage column.

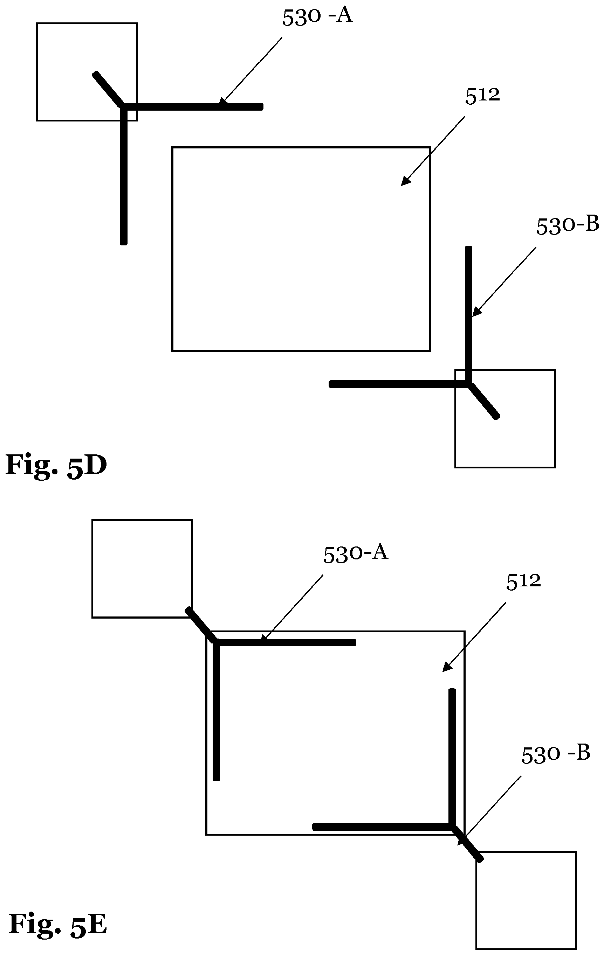

In some implementations, the retractable support 530 may comprise a plurality of supports acting together to support a subset of storage containers in the vertical stack. For example, the retractable support 530 may comprise two supports, or inserts, as shown in Fig. 5D. In such an implementation, a first insert 530-A and a second insert 530-B act together to support the load acting through storage container 512. The first insert 530-A and second insert 530-B are shown in the retracted position in Fig. 5D, and in the extended position in Fig. 5E.

In some implementations, a first insert is configured to extend from a first support beam of the storage column, and a second insert is configured to extend from a second support beam of the storage column. In some implementations, the first support beam is opposite and parallel to the second support beam. In the exemplary implementation shown in Fig. 5D and Fig. 5E, each insert 530-A, 530-B extends from a corner of the storage column 512 in the extended position, and retracts out of the storage column 512 in the retracted position. Each insert 530-A, 530-B extends partially across the storage column in both the X- and Y- directions, in order to support the weight or load acting through the storage container 512. The first insert 520-A may be configured to extend from a first support beam of the storage column, and the second insert 530-B may be configured to extend from a second support beam of the storage column, where the first support beam is opposite and parallel to the second support beam. In alternative configurations, the inserts 530-A and 530-B may extend from two non-opposing support beams, for example a combination of horizontal and vertical support beams.

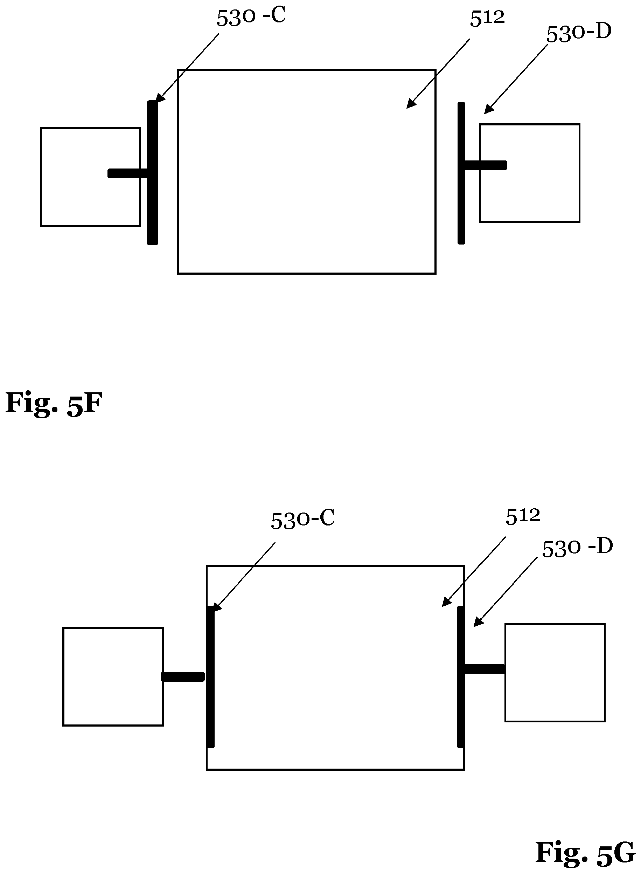

In yet other configurations, as shown in Fig. 5F and Fig. 5G, the one or more inserts may extend from one or more sides of the storage container 512. In the exemplary configuration shown in Fig.5F, a retractable support, comprising a first insert 530-C and a second insert 530-D, is in the retracted position, and it can be seen that the retractable support is not in contact with the bottom or base of the storage container 512, and is thus not supporting the weight or load of the storage containers in the stack above, acting through storage container 512. As the first insert 530-C and the second insert 530-D are in the retracted position, the inserts 530-C, 530-D are not obstructing the storage column, i.e. are not obstructing the vertical stack of storage containers.

In Fig. 5G, the first insert 530-C and second insert 530-D are in the extended position, and the retractable support 530 is thus in contact with the base of the storage container 512, and is supporting the weight or load of the storage containers in the stack above, acting through storage container 512. The inserts 530-C, 530-D extend from a first side of the storage column and a second side of the storage column, where the first side is opposite and parallel to the second side. In configurations where the one or more inserts extend from one or more sides of the storage column, an insert may extend from either a support beam, or from a space or a gap between adjacent storage columns in the grid. In alternative configurations, two or more inserts may extend from non-opposing support beams, or may extend from non-opposing sides of the storage column.

In other implementations, the storage column 502 can be defined by at least four vertical support beams, with a respective support beam positioned at each corner of the storage column 502, where an insert of the retractable support 530 is configured to extend from each support beam of the storage column 502.

In the exemplary configurations shown in Fig.5A-5G, exemplary geometries of the one or more inserts are depicted. However, it would be readily understood by the skilled person that many different insert shapes and/or geometries are possible which would allow the retractable support to support a subset of stacked storage containers in a storage column. For example, an insert may be square, rectangular, triangular, circular, "L-shaped", "Y-shaped", "T-shaped", or any combination of such geometries. In configurations where a retractable support comprises a plurality of inserts, the plurality can comprise inserts of different geometries. Inserts may be configured to extend partially or fully across the storage column, and may join together to form a continuous floor on which a storage container can sit. In other implementations, inserts may be configured to extend only to the extent required to support the subset of stacked storage containers.

The retractable support 530 can comprise one or more actuators, with the one or more inserts of the retractable support configured to extend in response to an activation of the one or more actuators, the one or more inserts configured to support a subset of a plurality of storage containers in a vertical stack when extended. In other words, the one or more inserts of the retractable support may move into the extended position in response to an activation of one or more actuators, and may move into the retracted position in response to a deactivation (or re-activation) of one or more actuators. In some implementations, the one or more actuators can comprise one or more levers. Other examples of actuators include one or more buttons, one or more switches, one or more motors, or the like. The terms "activation", "deactivation" and "reactivation" therefore mean, in this context, an interaction such as an actuation or application of force to the actuator.

In some configurations, each insert may have a corresponding actuator. For example, in a configuration comprising four inserts, there may be four actuators, wherein each actuator causes the extension or retraction of a corresponding insert in response to an activation or deactivation of the actuator. In other configurations, a plurality of inserts may extend or retract in response to the activation or deactivation of one actuator. For example, in a configuration of four inserts, the extension of each insert may be caused by the activation of one actuator.

An actuator of the one or more actuators may comprise a manual button, a lever, or a switch, which when activated causes a corresponding insert to extend, and when deactivated causes the corresponding insert to retract.

The storage and retrieval system may include a drive system which is configured to move the retractable support between the retracted position and the extended position. Such a drive system may be a manual drive system, or an automatic drive system, and may be, for example, a spring-loaded mechanism or a motor system. The one or more actuators may be configured to activate the drive system of the retractable support, in order to move the retractable support to the extended position, and may also be configured to deactivate the drive system of the retractable support, in order to move the retractable support to the retracted position. The manual drive system maybe activated and/or deactivated manually, for example via a lever, button or switch. The automatic drive system may be activated and/or deactivated automatically, for example via a controller or control system. Such a controller or control system may be processing system 400 of Fig.4.

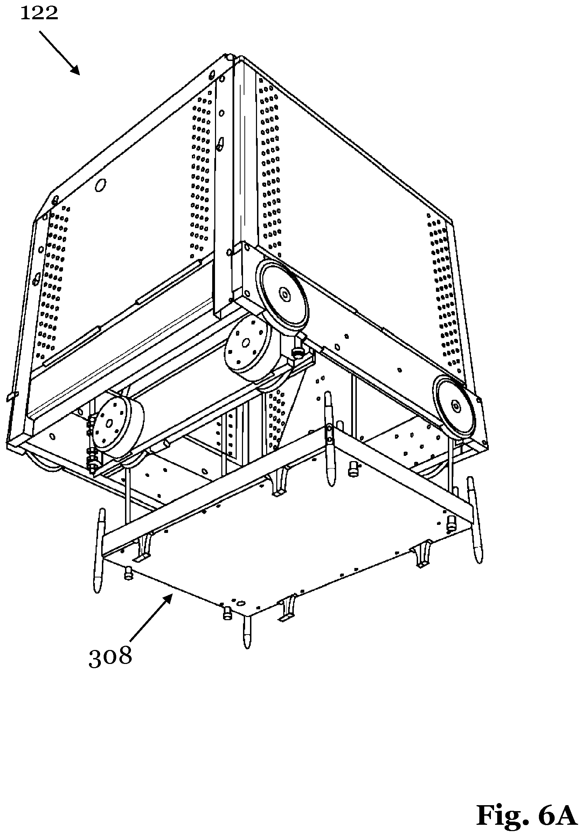

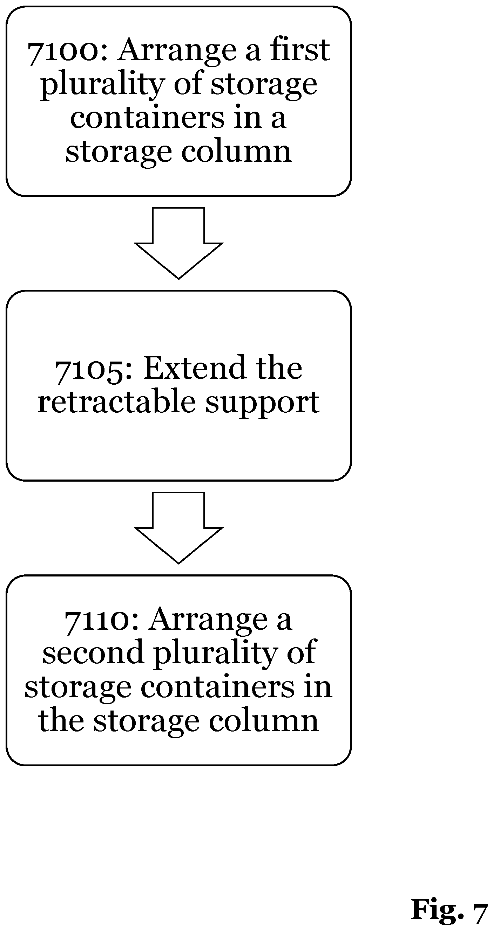

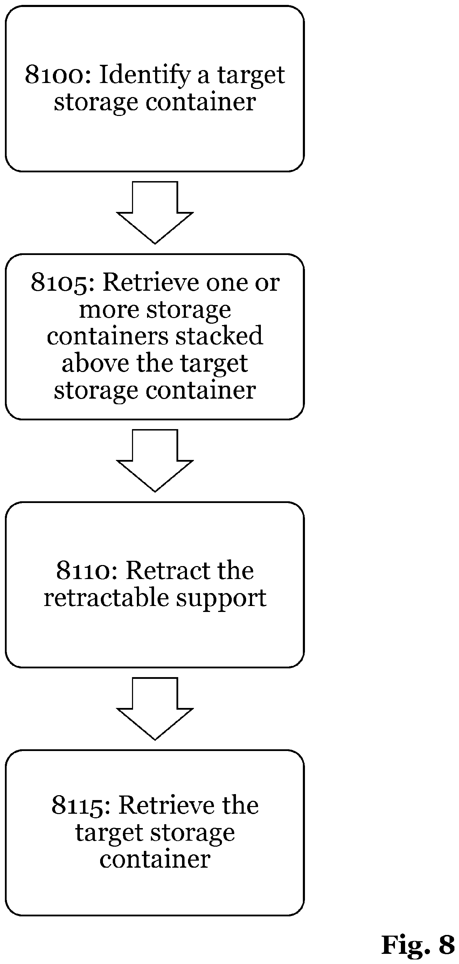

In a preferred implementation, the container-handling vehicle, or robot, 122 is configured to activate one or more actuators of the retractable support to move the retractable support to the extended position, and is also configured to deactivate the one or more actuators to move the retractable support to the retracted position. In particular, a gripping device 308 of the container-handling vehicle 122 may be configured to activate and deactivate the one or more actuators in order to extend and retract the retractable support 530. The container-handling vehicle 122 is depicted in Fig.6A, along with gripping device 308. As noted previously, the gripping device can be lowered into the storage column and/or raised out of the storage column, and is configured to grip or engage a storage container 112, for example, by gripping a part of the storage container 112, or by passively or actively engaging a suitably configured part of the storage container 112. In the present invention, the gripping device may also be further configured to actuate the one or more actuators, for example while raising or lowering a storage container into the storage column. In other words, the gripping device 308 of the container-handling vehicle may be configured to cause the retractable support to move between the extended position and the retracted position during the process of stacking storage containers in the storage column. This implementation is described further with reference to Fig. 7 and Fig. 8 below.

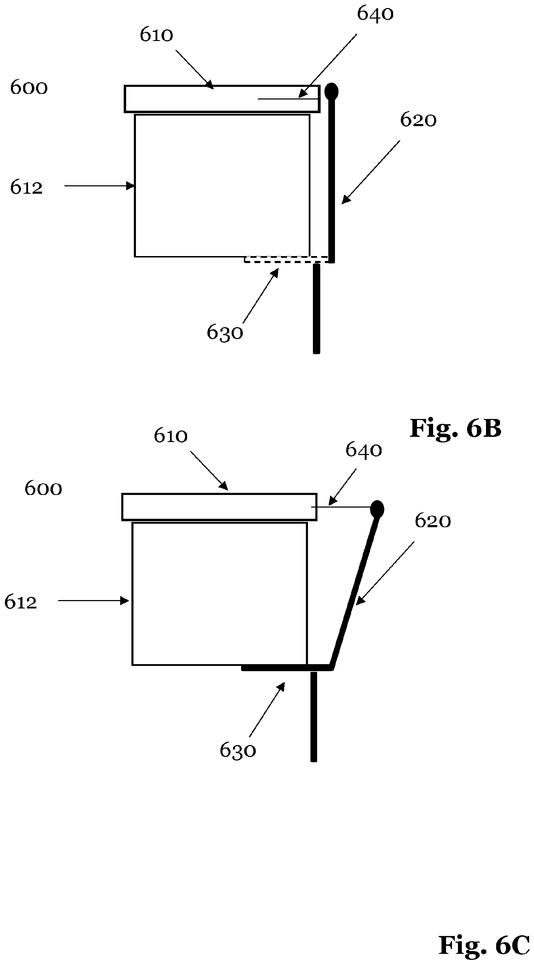

Fig. 6B and Fig. 6C depict an exemplary configuration, wherein storage container 512 is being lowered into a storage column (not shown) by a container-handling vehicle 122. In this configuration, the retractable floor comprises one insert 530, and one actuator 520, wherein the actuator 520 is a lever, and a component of the container-handling vehicle 610 is shown. The component 610 may be, for example, a gripping device 308 of a container-handling vehicle 122. Fig. 6B depicts the retractable floor 530 in the retracted position. In Fig.6C, the component 610 has activated the actuator 620 via an interaction 640 with the lever 620, and the retractable floor 630 has moved into the extended position underneath storage container 612. In configurations where the component 610 is a gripping device 308 of a container-handling vehicle 122, the gripping device 610 may comprise a component 640 configured to extend out of the gripping device in order to activate the lever, as shown in Fig. 6C. As can be seen in Fig. 6B and 6C, the lever 520 can have a height greater than the height of the storage container, allowing the gripping device 308 to activate the lever above the storage container with the retractable support extending below the storage container.

In this exemplary configuration, the retractable floor can be retracted again by deactivating the lever 620, for example via the container-handling vehicle 610 interacting with the lever 620 such as to return the lever 620 to the upright position shown in Fig. 6B.

In other implementations, a controller or control unit, such as processing system 400 of Fig. 4, is configured to activate one or more actuators of the retractable support to move the retractable support to the extended position, and configured to deactivate the one or more actuators to move the retractable support to the retracted position. In other words, the movement of the retractable support between the extended position and the retracted position may be controlled by a controller or control unit of the system.

In some implementations, more than one retractable support may be provided in a storage column of the storage and retrieval system. For example, the storage column may comprise a second retractable support, where the second retractable support is arranged to support a second subset of the plurality of storage containers in the vertical stack. In this way, the vertical stack can be split into a plurality of separate stacks, where the load or weight of storage containers is divided between the separate stacks. This further facilitates the inclusion of taller stacks of storage containers in the grid of the storage and retrieval system, while reducing the overall load or weight acting on the lower storage containers in the stack. In one exemplary configuration, a retractable support is provided between each storage container in a vertical stack, enabling the stacking of fragile containers (e.g. cardboard containers), or heavier storage containers which would otherwise not be suitable for stacking. As each retractable support can be extended and retracted independently, numerous configurations for stacking storage containers in a storage column are possible.

In yet other implementations, the retractable support 530 may extend into more than one storage column. For example, a retractable support may be configured to extend from and retract into a support beam positioned between two adjacent columns, and may comprise a first insert which extends into a first column of the adjacent columns, and a second insert which extends into the second column of the adjacent columns, thereby providing a retractable support in each adjacent column.

In some configurations, a retractable support may be configured to extend from and retract into two support beams positioned between two adjacent columns. In such configurations, the retractable support may comprise a first insert which extends from the first support beam into a first column of the adjacent columns, and a second insert which extends from the first support beam into the second column of the adjacent columns, and a third insert which extends from the second support beam into the first column of the adjacent columns, and a fourth insert which extends into the second column of the adjacent columns. The first and third insert thus act together to provide a support or floor for storage containers stacked in the first column, and the second and fourth insert act together to provide a support or floor for storage containers stacked in the second column. In some implementations, the retractable floor may extend from a space or gap between adjacent columns, instead of or in addition to extending from a support beam of the adjacent storage columns.

In yet other implementations, the retractable support 530 may extend into up to four storage columns. In such implementations, a first insert of the retractable support may extend into a first column, a second insert of the retractable support may extend into a second column, a third insert of the retractable support may extend into a third column, and a fourth insert of a retractable support may extend into a fourth column. The first, second, third and fourth inserts extend from and retract into a vertical support beam shared by the four storage columns in such a configuration.

The retractable support may be fixed to the storage column, for example by means of screws, bolts, rivets or the like, or may be removably detachable from the storage column. In configurations where the retractable support is fixed to the storage column, the retractable support may be provided in a fixed location in the storage column of the storage and retrieval system. For example, the retractable support may be provided at an approximate halfway point in the height of the storage column, such as to divide the storage column into two separate stacks when the retractable support is in the extended position.

The retractable support(s) may also be configured to accommodate piping for sprinklers, and/or one or more cables. Accommodating piping and cables in this manner allows for efficient use of space within the storage and retrieval system.

Also provided herein is a method 700 of stacking a plurality of storage containers in any implementation of the storage and retrieval system described above. A computer, controller or control unit may be configured to carry out the steps of method 700. For example, the method may be carried out by processing system 400 described above in reference to Figure 4.

At step 7100, a container-handling vehicle is caused to arrange a first plurality of storage containers in the storage column. This may include the container-handling vehicle transporting one or more storage containers from a port of a pick-up port column to the storage column, and/or stacking the one or more storage containers in the storage column. The storage containers may be arranged in a particular order or configuration, for example according to the instructions of the database of the processing system 400. While the first plurality of storage containers is being arranged in the storage column, the retractable support is in the retracted position, and thus does not obstruct the stacking of the storage containers. The configuration of the first plurality of storage containers may be determined based on the weight and/or contents of the one or more storage containers. For example, the number of storage containers in the first plurality of storage containers may be limited by the maximum allowable load on the lowermost storage container to be stacked.

At step 7105 the retractable support is moved to the extended position, i.e. the retractable support is caused to extend. The retractable support may be caused to move from the retracted to the extended position by the activation of one or more actuators. In some configurations, causing the retractable support to extend may comprise causing the container-handling vehicle to activate the retractable support from the retracted to the extended position. Optionally, the container-handling vehicle may interact with one or more levers of the retractable support in order to cause the retractable support to extend. In other configurations, the retractable support may be caused to extend automatically, for example via an instruction from the controller (such as processing system 400), or may be caused to extend via the activation of a manual actuator, for example a button or switch.

At step 7110, the container-handling vehicle is caused to arrange a second plurality of storage containers in the storage column, with the second plurality of storage containers supported by the now-extended retractable support. The stacking of one or more storage containers on the extended retractable support may lock the retractable support in position in some implementations. This step may include the container-handling vehicle transporting one or more storage containers from a port of a pick-up port column to the storage column, and/or stacking the one or more storage containers in the storage column. The second plurality of storage containers may again be arranged in a particular order or configuration, for example according to the instructions of the database of the processing system 400. The configuration of the second plurality of storage containers may be determined based on at least one of the weight or contents of the one or more storage containers. For example, the number of storage containers in the second plurality of storage containers may be limited by the maximum allowable load on the lowermost storage container to be stacked on the retractable support, and/or may be limited by the maximum allowable load on the retractable support.

The method 700 thus provides a means of splitting or dividing a vertical stack of storage containers into two or more separate stacks, thus splitting the load or weight of the storage containers between the stacks. As the retractable support takes the load or weight of a subset of the storage containers in the stack, the overall load on lower containers is reduced. This means that, for taller stacks, by using one more retractable supports within the corresponding storage column, the load on storage containers located lower in the stack can be kept within an acceptable range or limit. The inclusion of taller stacks of storage containers in the grid can thus be facilitated.

Steps 7105 and 7110 of method 700 may be repeated to facilitate the extension of a second retractable support and a third plurality of storage containers supported by the second retractable support. Similarly, the method may include the extension of a third retractable support and a fourth plurality of storage containers supported by the third retractable support, and so on. In other words, steps 7105 and 7110 may be repeated in order to split the vertical stack into any number of smaller stacks.

In other configurations, steps 7105 and 7110 may be repeated such that a retractable support is provided between each storage container in a vertical stack, enabling the stacking of fragile containers (e.g. a cardboard container), or heavier storage containers which would otherwise not be suitable for stacking.

Also provided herein is a method 800 of retrieving a storage container from any implementation of the claimed storage and retrieval system described above. A computer, controller or control unit may be configured to carry out the steps of method 800. For example, the method may be carried out by processing system 400 described above in reference to Figure 4.

At step 8100, a target storage container in the storage column is identified. The target storage container may be identified using its unique identifier, which may be marked on the storage container using a computer-readable identifier (e.g., a barcode, quick-response code or radio-frequency identification tag). The target storage container may be identified by the computer, controller or control unit configured to carry out the method 800, such as processing system 400.

At step 8105, the container-handling vehicle is caused to retrieve one or more storage containers stacked above the target storage container in the storage column, wherein the one or more storage containers are supported by the extended retractable support. Retrieving the one or more storage containers may comprise repositioning the one or more storage containers in the grid. In other words, where the target storage container is positioned below other storage containers in the stack, a controlled 'digging' operation takes place, where storage containers above the target storage container are sequentially lifted and repositioned, temporarily or permanently, to other locations in the grid.

In some implementations, the target container may be located below an extended retractable support. In this case, at step 8110, the retractable support is caused to retract. In other words, the retractable support is moved to the retracted position. The retractable support may be caused to move from the extended to the retracted position by the deactivation of one or more actuators. In some configurations, causing the retractable support to retract may comprise causing the container-handling vehicle to deactivate the retractable support from the extended to the retracted position. Optionally, the container-handling vehicle may interact with one or more levers of the retractable support in order to cause the retractable support to retract. In other configurations, the retractable support may be caused to retract automatically, for example via an instruction from the controller (such as processing system 400), or may be caused to retract via the activation of a manual actuator, for example a button or switch.

At step 8115, the container-handling vehicle is caused to retrieve the target storage container from the storage column. The target storage container may then be transported to, for example, a port column for transfer out of the grid.

In configurations where there are one or more storage containers positioned between the retractable support and the target storage container, step 8105 is repeated after step 8110 in order to retrieve the remaining one or more storage containers stacked above the target storage container.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A storage and retrieval system comprising:
at least one storage column, the storage column configured to receive storage containers from a container-handling vehicle and accommodate a plurality of received storage containers in a vertical stack; and
a first retractable support, wherein the first retractable support is movable between:
a first retracted position; and
a second extended position, in which the first retractable support is arranged to support a subset of the plurality of storage containers in the vertical stack.

2. The storage and retrieval system of claim 1, wherein the first retractable support comprises:
one or more actuators, and
one or more inserts configured to extend in response to an activation of the one or more actuators, the one or more inserts configured to support the subset of the plurality of storage containers in the vertical stack when extended.

3. The storage and retrieval system of any preceding claim, further comprising a drive system configured to move the first retractable support between the retracted position and the extended position, optionally, wherein the drive system is one of a manual drive system or an automatic drive system.

4. The storage and retrieval system of claim 3 when dependent on claim 2, wherein the one or more actuators comprise one or more levers, the one or more levers configured to activate the drive system.

5. The storage and retrieval system of any of claims 2 to 4, wherein an insert of the one or more inserts is configured to extend from a support beam of the storage column.

6. The storage and retrieval system of claim 5, wherein an insert of the one or more inserts is configured to extend from a vertical support beam of the storage column, and/or wherein an insert of the one or more inserts is configured to extend from a horizontal support beam of the storage column.

7. The storage and retrieval system of claim 5, wherein a first insert is configured to extend from a first support beam of the storage column, and a second insert is configured to extend from a second support beam of the storage column, wherein the first support beam is opposite and parallel to the second support beam.

8. The storage and retrieval system of any of claims 2 to 7, wherein the one or more inserts are configured to act together to provide a floor to support at least the subset of the plurality of storage containers in the vertical stack.

9. The storage and retrieval system of any preceding claim, wherein the storage column comprises a second retractable support, and the second retractable support is arranged to support a second subset of the plurality of storage containers in the vertical stack.

10. The storage and retrieval system of any preceding claim, wherein the first and/or second retractable support is fixed to the storage column, or wherein the first and/or second retractable support is removably detachable from the storage column.

11. A method of stacking a plurality of storage containers in the storage and retrieval system of any of claims 1 to 10, the method comprising:
causing the container-handling vehicle to arrange a first plurality of storage containers in the storage column;
causing the retractable support to extend; and
causing the container-handling vehicle to arrange a second plurality of storage containers in the storage column, the second plurality of storage containers supported by the extended retractable support.

12. The method of claim 11, wherein causing the retractable support to extend comprises:
causing the container-handling vehicle to activate the retractable support from the retracted to the extended position, optionally via interaction with one or more levers.

13. A method of retrieving a storage container from the storage and retrieval system of any of claims 1 to 10, the method comprising:
identifying a target storage container in the storage column;
causing a container-handling vehicle to retrieve one or more storage containers stacked above the target storage container in the storage column, wherein the one or more storage containers are supported by the extended retractable support;
causing the retractable support to retract; and
causing the container-handling vehicle to retrieve the target storage container from the storage column.

14. The method of claim 13, wherein causing the retractable support to retract comprises:
causing the container-handling vehicle to deactivate the retractable support from the extended to the retracted position, optionally via interaction with one or more levers.

15. A computer readable medium comprising instructions which, when executed by one or more processors, cause a computer to perform the method of any of claims 11 to 14, or
a computer program comprising instructions which, when the program is executed by a computer, cause the computer to carry out the method of any of claims 11 to 14, or
a controller comprising a processor and a memory, the controller configured to perform the method of any of claims 11 to 14.
